# EUROPEAN PATENT APPLICATION

(11) **EP 1 816 851 A2**
(43) Date of publication of application: **08.08.2007**
(21) Application number: 06254618.9
(22) Date of filing: 05.09.2006
(51) Int. Cl.: H04N 3/08

(54) **Apparatus and method for preventing image distortion**

(30) Priority: 25.01.2006 KR 20060007904
(71) Applicant: Samsung Electronics Co., Ltd., Suwon-si, Gyeonggi-Do (KR)
(72) Inventor: Wom, Jong-hwa, Seoul (KR)
(74) Representative: Greene, Simon Kenneth

(57) **Abstract**

An image distortion prevention apparatus and method for preventing distortion of an image formed with light which is scanned by an optical scanner and has information regarding the image, the optical scanner operating in response to a mirror drive signal that determines a degree of deflection of the optical scanner are provided. The apparatus includes: a deflection sensing unit sensing the degree of deflection of the optical scanner when the optical scanner receives a horizon instruction signal or no signal; and a drive signal adjustment unit adjusting a predetermined candidate drive signal according to the sensing result and outputting the result of adjusting as the mirror drive signal, wherein the candidate drive signal instructs normal operation of the optical scanner, the horizon instruction signal instructs no deflection of the optical scanner, and the scanner operates normally in response to the result of adjusting.

## Description

The present invention relates to an optical scanner such as a MEMS scanner, and more particularly, to an image distortion prevention apparatus and method, wherein the apparatus operates in response to a mirror drive signal determining the degree of deflection of an optical scanner capable of scanning light having information regarding an image and prevents the deflection of an image formed by light that is scanned by the optical scanner.

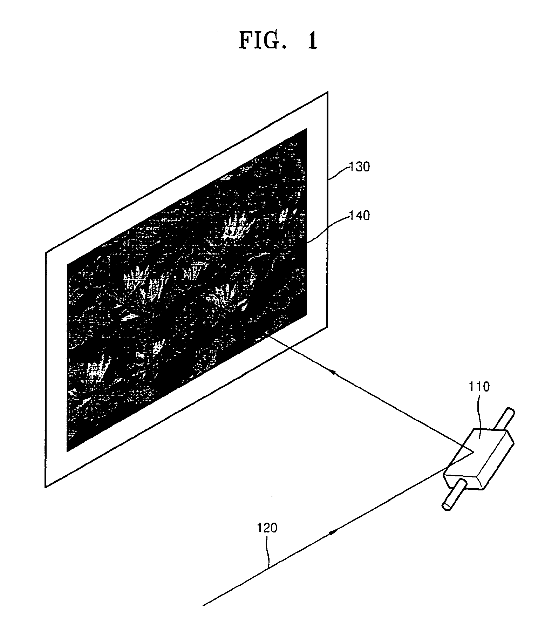

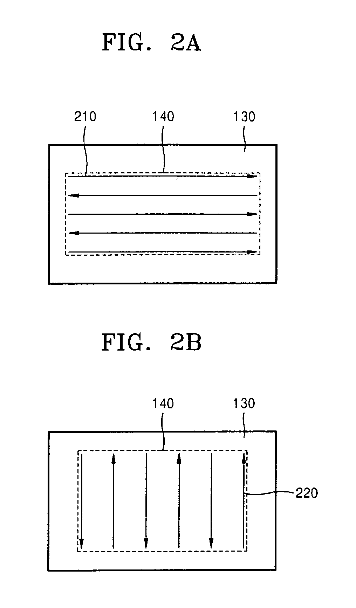

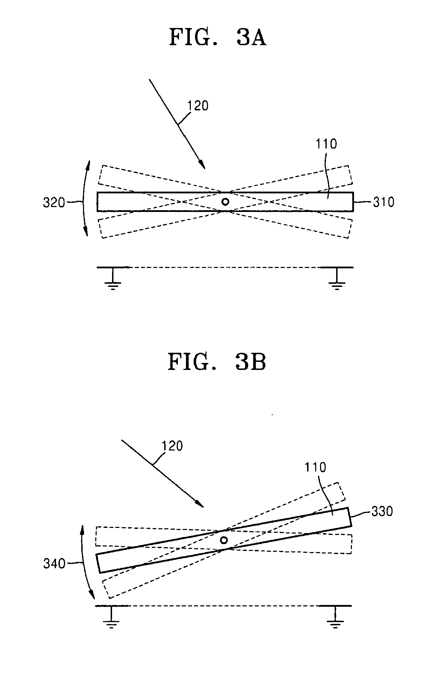

FIG. 1 is a perspective view for explaining the principle of forming an image by optical scanning. FIG. 2A is a diagram illustrating horizontal scanning. FIG. 2B is a diagram illustrating vertical scanning. FIG. 3A is a diagram illustrating a state where a normal optical scanner operates in response to candidate drive signals in a seesaw manner; and FIG. 3B is a diagram illustrating a state where an abnormal optical scanner operates in response to candidate drive signals in a seesaw manner.

Display apparatuses such as laser projection TVs that realize images by optical scanning include an optical scanner 110 capable of scanning light 120 in various directions. Here, the optical scanner 110 operates in a seesaw manner in response to a mirror drive signal that determines the degree of deflection of the optical scanner 110. The direction to which the light is scanned is determined by the mirror drive signal.

The optical scanner 110 includes a mirror that scans the light 120 onto a screen 130 by reflecting the incident light 120. Here, the optical scanning may be bi-directional scanning in the horizontal direction 210 shown in FIG. 2A or bi-directional scanning in the vertical direction 220 shown in FIG. 2B.

In addition, the light 120 which the optical scanner 110 scans onto the screen has information regarding an image 140, and accordingly the image 140 is formed on the screen 130.

To prevent distortion of the image 140 formed by the optical scanner 110 that performs bi-directional scanning, all of the start points (or end points) of the respective scan lines in one direction and the end points (or the start points) of the respective scan lines in the other direction should be positioned along the same line on the screen 130, as shown in FIGS. 2A and 2B.

Likewise, to prevent distortion of the image 140 formed by the optical scanner 110 that performs one-directional scanning, the start points (or end points) of the respective scan lines should be positioned along the same line on the screen 130.

To this end, the optical scanner 110 should operate in a normal seesaw manner as shown in FIG. 3A. For the optical scanner 110 to operate in a normal seesaw manner, the mirror drive signal that is input to the optical scanner 110 should instruct a normal seesaw movement of the optical scanner 110, and the optical scanner 110 should also be in a normal state.

The optical scanner 110 is said to be normal when the optical scanner 110 is not deflected when there is no input signal to the optical scanner 110, as indicated by reference numeral 310 in FIG. 3A, whereas the optical scanner 110 is said to be abnormal when the optical scanner 110 is deflected when there is no input signal to the optical scanner 110, as indicated by reference numeral 330 in FIG. 3B.

In the prior display apparatus, if the optical scanner 110 is in an abnormal state, when a mirror drive signal that instructs normal seesaw movement of the optical scanner 110 is input to the optical scanner 110, the optical scanner 110 has abnormal seesaw movement 340, and thus displays distorted images on the screen 130.

The present invention provides an image distortion prevention apparatus that causes an optical scanner to operate with normal seesaw movement, even when the optical scanner is abnormal when the optical scanner receives a signal instructing normal seesaw movement, assuming that the optical scanner is a normal optical scanner which is not deflected when there is no input signal.

The present invention also provides an image distortion prevention method that causes an optical scanner to operate with normal seesaw movement, even when the optical scanner is abnormal when the optical scanner receives a signal instructing normal seesaw movement, assuming that the optical scanner is a normal optical scanner which is not deflected when there is no input signal.

According to an aspect of the present invention, there is provided an apparatus for preventing distortion of an image formed with light which is scanned by an optical scanner and has information regarding the image , the optical scanner operating in response to a mirror drive signal that determines a degree of deflection of the optical scanner, the apparatus comprising: a deflection sensing unit sensing the degree of deflection of the optical scanner when the optical scanner receives a horizon instruction signal or no signal; and a drive signal adjustment unit adjusting a predetermined candidate drive signal according to the sensing result and outputting the result of adjusting as the mirror drive signal, wherein the candidate drive signal instructs normal operation of the optical scanner, the horizon instruction signal instructs no deflection of the optical scanner, and the scanner operates normally in response to the result of adjusting.

According to another aspect of the present invention, there is provided a method of preventing distortion of an image formed with light which is scanned by an optical scanner and has information regarding the image, the optical scanner operating in response to a mirror drive signal that determines a degree of deflection of the optical scanner, the method comprising: (a) sensing the degree of deflection of the optical scanner when the optical scanner receives a horizon instruction signal or no signal; and (b) adjusting a predetermined candidate drive signal according to the sensing result and outputting the result of adjusting as the mirror drive signal, wherein the candidate drive signal instructs normal operation of the optical scanner, the horizon instruction signal instructs no deflection of the optical scanner, and the scanner operates normally in response to the result of adjusting.

According to another aspect of the present invention, there is provided a method of preventing distortion of an image formed with light which is scanned by an optical scanner and has information regarding the image, the optical scanner operating in response to a mirror drive signal that determines a degree of deflection of the optical scanner, the method comprising: (a) sensing the degree of deflection of the optical scanner optical scanner when the optical scanner receives a horizon instruction signal or no signal; (b) inverting the candidate drive signal when the candidate drive signal has negative values; (c) generating a first adjustment signal by applying an offset corresponding to the sensing result to the inversion result; (d) extracting the square root of the first adjustment signal and generating a second adjustment signal by applying an offset corresponding to the extracted square root result to the candidate drive signal; and (e) increasing the level of second adjustment signal to a drivable level, and outputting the result of increasing as the mirror drive signal, wherein the candidate drive signal instructs normal operation of the optical scanner, the horizon instruction signal instructs no deflection of the optical scanner, and the scanner operates normally in response to the result of adjusting.

According to another aspect of the present invention, there is provided a method of preventing distortion of an image formed with light which is scanned by an optical scanner and has information regarding the image, the optical scanner operating in response to a mirror drive signal that determines a degree of deflection of the optical scanner, the method comprising: (a) sensing the degree of deflection of the optical scanner optical scanner when the optical scanner receives a horizon instruction signal or no signal; (b) inverting the candidate drive signal when the candidate drive signal has negative values, and extracting the square root of the inversion result; (c) generating a fourth adjustment signal by applying an offset corresponding to the sensing result to the candidate drive signal; (d) generating a fifth adjustment signal by applying an offset corresponding to the extracted square root result to the fourth adjustment signal; and (e) increasing the level of fifth adjustment signal to a drivable level and outputting the result of increasing as the mirror drive signal, wherein the candidate drive signal instructs normal operation of the optical scanner, the horizon instruction signal instructs no deflection of the optical scanner, and the scanner operates normally in response to the result of adjusting.

According to another aspect of the present invention, there is provided a method of preventing distortion of an image formed with light which is scanned by an optical scanner and has information regarding the image, the optical scanner operating in response to a mirror drive signal that determines a degree of deflection of the optical scanner, the method comprising: (a) sensing the degree of deflection of the optical scanner optical scanner when the optical scanner receives a horizon instruction signal or no signal; (b) inverting the candidate drive signal when the candidate drive signal has negative values, and extracting a square root of the inversion result; (c) generating a seventh adjustment signal by applying an offset corresponding to the extracted square root result to the candidate drive signal; (d) generating an eighth adjustment signal by applying an offset corresponding to the sensing result to the seventh adjustment signal; and (e) increasing the level of the eighth adjustment signal to a drivable level and outputting the result increasing as the mirror drive signal, wherein the candidate drive signal instructs normal operation of the optical scanner, the horizon instruction signal instructs no deflection of the optical scanner, and the scanner operates normally in response to the result of adjusting.

The above and other features and advantages of the present invention will become more apparent by describing in detail exemplary embodiments thereof with reference to the attached drawings in which:
FIG. 1 is a perspective view illustrating the principle of forming an image by conventional optical scanning;
FIGS. 2A and 2B are reference diagrams for describing kinds of conventional optical scanning;
FIGS. 3A and 3B are diagrams illustrating the seesaw movement of a conventional optical scanner;
FIG. 4 is a schematic block diagram illustrating an image distortion prevention apparatus according to an embodiment of the present invention;
FIG. 5 is a schematic diagram for explaining the operation of a deflection sensing unit depicted in FIG. 4 according to an embodiment of the present invention;
FIG. 6 is a second reference diagram for explaining the operation of the deflection sensing unit depicted in FIG. 4 according to another embodiment of the present invention;
FIG. 7 is a detailed block diagram illustrating an image distortion prevention apparatus according to an embodiment of the present invention;
FIGS. 8A through 8D are waveform diagrams depicting the operation of a deflection prediction unit illustrated in FIG. 7;
FIG. 9 is a detailed block diagram illustrating an image distortion prevention apparatus according to another embodiment of the present invention;
FIG. 10 is a detailed block diagram illustrating an image distortion prevention apparatus according to another embodiment of the present invention;
FIG. 11 is a flowchart illustrating an image distortion prevention method according to an embodiment of the present invention;
FIG. 12 is a flowchart illustrating an image distortion prevention method according to another embodiment of the present invention; and
FIG. 13 is a flowchart illustrating an image distortion prevention method according to another embodiment of the present invention.

The attached drawings for illustrating exemplary embodiments of the present invention are referred to in order to gain a sufficient understanding of the present invention, the merits thereof, and the objectives accomplished by the implementation of the present invention.

Hereinafter, the present invention will be described in detail by explaining exemplary embodiments of the invention with reference to the attached drawings. Like reference numerals in the drawings denote like elements.

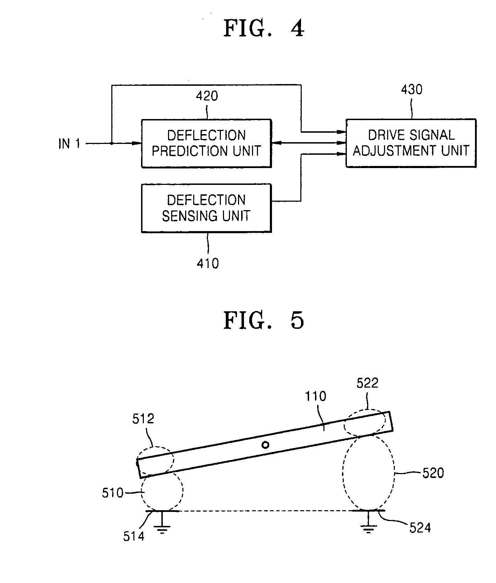

FIG. 4 is a schematic block diagram illustrating an image distortion prevention apparatus according to an embodiment of the present invention. The image distortion prevention apparatus includes a deflection sensing unit 410, a deflection prediction unit 420, and a drive signal adjustment unit 430.

The deflection sensing unit 410 senses a deflection angle of the optical scanner 110 when the optical scanner receives a horizon instruction signal or no signal. The horizon instruction signal instructs no deflection of the optical scanner 110, that is, no inclination to either side.

If the optical scanner 110 is abnormal, the deflection sensing unit 410 may sense that the optical scanner 110 is deflected, in case that the optical scanner receives a horizon instruction signal or no signal. On the other hand, if the optical scanner 110 is normal, the deflection sensing unit 410 may sense that the optical scanner 110 is not deflected, in case that the optical scanner receives a horizon instruction signal or no signal.

The deflection prediction unit 420 predicts the degree of deflection of the optical scanner 110 when the optical scanner 110 receives a candidate drive signal or a first adjustment signal. The drive signal adjustment unit 430 adjusts the candidate drive signal according to the sensing result of the deflection sensing unit 410 and/or the prediction result of the deflection prediction unit 420.

The candidate drive signal instructs normal seesaw movement of the optical scanner 110, assuming that the optical scanner 110 is normal, and is input to the deflection prediction unit 420 and the drive signal adjustment unit 430 through an input terminal IN 1. The candidate drive signal is a periodic signal having a predetermined period, and may be set in advance. In addition, the first adjustment signal is produced by the drive signal adjustment unit 430 to adjust the candidate drive signal according to the sensing result of the deflection sensing unit 410.

FIG. 5 is a schematic diagram for explaining the operation of the deflection sensing unit 410 which uses an electrical mechanism to sense the degree of deflection of the optical scanner 110 when the optical scanner 110 receives a horizon instruction signal or no signal. Hereinafter, the operation of the deflection sensing unit 410 will be described with reference to FIG. 5.

There is a capacitance in both a space 510 (referred to as a first space) between a first end 512 of the optical scanner 110 and a first polar plate 514 and a space 520 (referred to as a second space) between a second end 522 of the optical scanner 110 and a second polar plate 524. The first and second polar plates 514 and 524 determine whether or not the optical scanner 110 is deflected. The first polar plate 514 is closer to the first end 512 of the optical scanner 110 than the second polar plate 524, and the second polar plate 524 is closer to the second end 522 of the optical scanner 110. The size of the first polar plate 514 may be equal to the size of the second polar plate 526.

If a horizon instruction signal or no signal is input to an abnormal optical scanner 110, the optical scanner 110 may be deflected. In this case, the distance between the first end 512 of the optical scanner 110 and the first polar plate 514 differs from the distance between the second end 522 and the second polar plate 524, and accordingly the capacitance of the first space 510 differs from the capacitance of the second space 520. The deflection sensing unit 410 can sense the degree of deflection of the optical scanner 110 by obtaining the difference between the capacitance of the first space 510 and the capacitance of the second space 520.

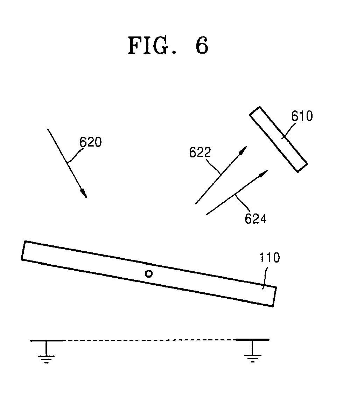

FIG. 6 is a schematic diagram illustrating the operation of the deflection sensing unit 410, which uses an optical mechanism to sense the degree of deflection of the optical scanner 110 when the optical scanner receives a horizon instruction signal or no signal. Hereinafter, the operation of the deflection sensing unit 410 will be described with reference to FIG. 6.

As depicted in FIG. 6, reference numeral 620 denotes incident light on the optical scanner 110 when the optical scanner receives a horizon instruction signal or no signal; reference numeral 622 denotes scanned light that is the reflected incident light from the optical scanner 110 when the optical scanner 110 is normal; and reference numeral 624 denotes scanned light that is the reflected incident light from the optical scanner 110 when the optical scanner 110 is abnormal.

In this case, the deflection sensing unit 410 can be embodied as a sensing device 610 sensing the scanned light 622 and 624. In this arrangement, the deflection sensing unit 410 can obtain the time elapsed from the start point where the light 620 is input, to the point where the light 622 or 624 is sensed. In this case, the time obtained when the optical scanner 110 is deflected is different from the time obtained when the optical scanner 110 is not deflected. The deflection sensing unit 410 can sense whether or not the optical scanner 110 is deflected by using the obtained time.

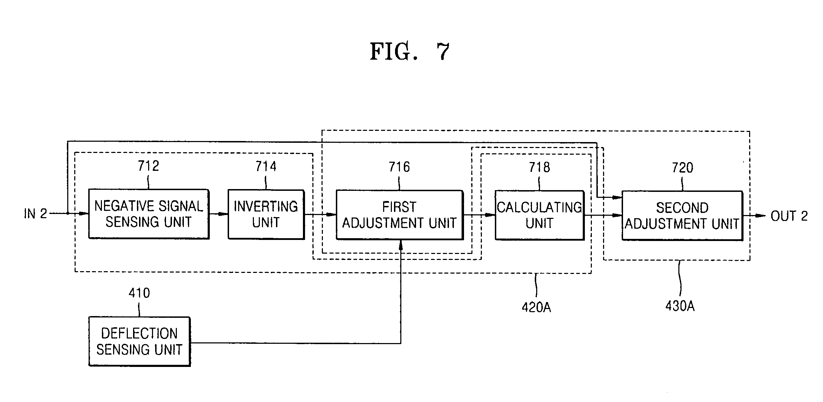

Embodiments of the present invention will be described below with reference to FIGS. 7 to 13.

FIG. 7 is a detailed block diagram illustrating an image distortion prevention apparatus according to an embodiment of the present invention. The image distortion prevention apparatus includes a deflection sensing unit 410, a deflection prediction unit 420A and a drive signal adjustment unit 430A.

The deflection prediction unit 420A performs the same function as the deflection prediction unit 420 according to the previous embodiment, and includes a negative signal sensing unit 712, an inverting unit 714 and a calculating unit 718. Moreover, the drive signal adjustment unit 430A performs the same function as the drive signal adjustment unit 430 in the previous embodiment, and includes a first adjustment unit 716 and a second adjustment unit 720.

The image distortion prevention apparatus according to the present embodiment operates in the following manner.

The negative signal sensing unit 712 senses a candidate drive signal input through an input terminal IN 2 to determine whether the candidate drive signal has a negative value, and the inverting unit 714 generates an inverted drive signal by inverting the candidate drive signal when the candidate drive signal is determined to have a negative value. In other words, the inverting unit 714 does nothing to the candidate drive signal when the candidate drive signal has a positive value, and inverts the candidate drive signal when the candidate drive signal has a negative value.

The first adjustment unit 716 generates a first adjustment signal by applying an offset corresponding to the sensing result of the deflection sensing unit 410 to the inverted drive signal, and the calculating unit 718 extracts a square root of the generated first adjustment signal and outputs the extracted square root result.

Since the degree of deflection of the optical scanner 110 is proportional to the square of the magnitude of the mirror drive signal, the calculating unit 718 predicts that a change in the inclination of the optical scanner 110 when the optical scanner 110 receives the first adjustment signal as the mirror drive signal is the square root of the first adjustment signal.

In this case, in order to extract the square root, the first adjustment signal should always have a positive value, and thus the deflection prediction unit 420A includes the negative signal sensing unit 712 and the inverting unit 714 in the present embodiment.

The second adjustment unit 720 generates a second adjustment signal by applying an offset corresponding to the extracted square root obtained from the calculating unit 718 to the candidate drive signal, generates a third adjustment signal by increasing the level of the generated second adjustment signal to a drivable level, and outputs the generated third adjustment signal through an output terminal OUT 2.

Here, "drivable level" denotes the level of the mirror drive signal capable of driving the optical scanner 110. Generally, the level of a candidate drive signal remains in a low voltage region, for example, ranging from -15 V to +15 V, whereas the drivable level lies in high voltage region, for example, ranging from -150 V to +150 V. If the level of the candidate drive signal remains in the low voltage region, the level of the inverted drive signal, the level of the first adjustment signal and the level of the second adjustment signal can also lie in the low voltage region, and therefore, it is desirable that the level of second adjustment signal be increased to the drivable level.

According to the embodiment of the present invention, the optical scanner 110 operates normally in response to the third adjustment signal input from the second adjustment unit 720. Consequently, the drive signal adjustment unit 430A including the first adjustment unit 716 and the second adjustment unit 720 generates the third adjustment signal that causes the optical scanner 110 to operate with normal seesaw movement, by adjusting the candidate drive signal, even when the optical scanner 110 is abnormal.

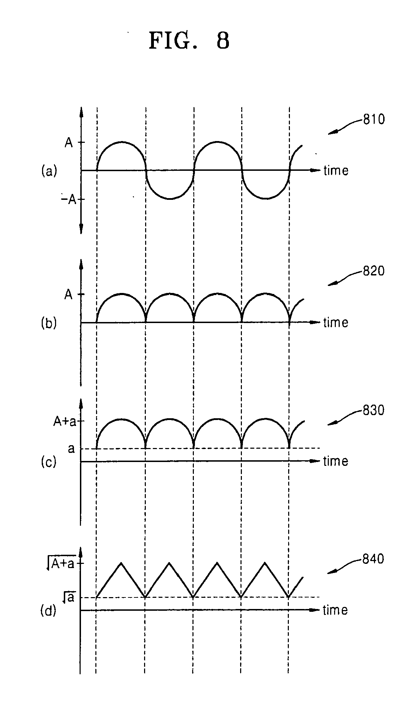

FIGS. 8A through 8D are waveform diagrams depicting the operation of the deflection prediction unit 420A.

Specifically, FIG. 8A is the waveform of a candidate drive signal 810 having an amplitude of A V. The candidate drive signal 810 desirably has a sinusoidal waveform when the optical scanner 110 performs horizontal scanning. Alternatively, the candidate drive signal may have a saw-tooth waveform or a square waveform when the optical scanner 110 performs horizontal scanning. Moreover, when the optical scanner 110 performs vertical scanning, the candidate drive signal desirably has a saw-tooth waveform.

FIG. 8B is the waveform of an inverted drive signal 820 generated by inverting negative portions of the candidate drive signal 810 sensed by the negative signal sensing unit 712. FIG. 8C is the waveform of a first adjustment signal 830 which the first adjustment unit 716 generates by applying an offset (+a V) corresponding to the sensing result of the deflection sensing unit 410 to the inverted drive signal 820. FIG. 8D is the waveform of an extracted square root result 840, which the calculating unit 718 obtains by taking the square root of the first adjustment signal 830.

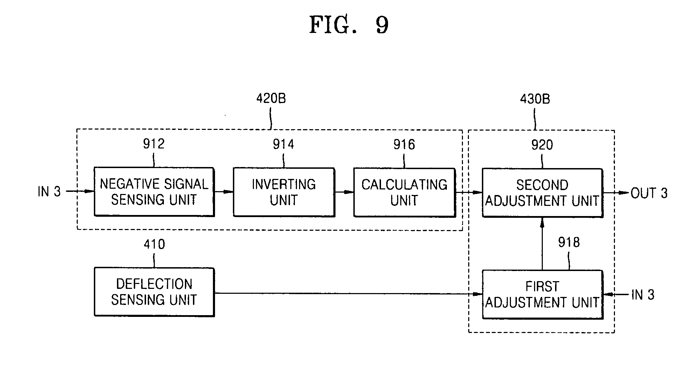

FIG. 9 is a detailed block diagram illustrating an image distortion prevention apparatus according to another embodiment of the present invention. The image distortion prevention apparatus includes a deflection sensing unit 410, a deflection prediction unit 420B and a drive signal adjustment unit 430B.

The deflection prediction unit 420B performs the same function as the deflection prediction unit 420 described above, and includes a negative signal sensing unit 912, an inverting unit 914 and a calculating unit 916. In addition, the drive signal adjustment unit 430B performs the same function as the drive signal adjustment unit 430, and includes a first adjustment unit 918 and a second adjustment unit 920.

The image distortion prevention apparatus according to the present embodiment operates in the following manner.

The negative signal sensing unit 912 senses a candidate drive signal input through an input terminal IN 3 to determine whether the candidate drive signal has a negative value, and the inverting unit 914 generates an inverted drive signal by inverting the candidate drive signal when the candidate drive signal is determined to have a negative value. In other words, the inverting unit 914 does nothing to the candidate drive signal when the candidate drive signal has a positive value, and inverts the candidate drive signal when the candidate drive signal has a negative value.

The calculating unit 916 extracts the square root of the inverted drive signal and outputs the extracted square root result. Since the degree of deflection of the optical scanner 110 is proportional to the square of the magnitude of the mirror drive signal, the calculating unit 916 predicts that a change in the inclination of the optical scanner 110 when the inverted drive signal is input to the optical scanner 110 as the mirror drive signal is the square root of the inverted drive signal.

In this case, in order to extract the square root, the inverted drive signal should always have a positive value, and thus the deflection prediction unit 420B includes the negative signal sensing unit 912 and the inverting unit 914 as described above in the present embodiment.

The first adjustment unit 918 generates a fourth adjustment signal by applying an offset corresponding to the sensing result of the deflection sensing unit 410 to the candidate drive signal.

The second adjustment unit 920 generates a fifth adjustment signal by applying an offset corresponding to the extracted square root result obtained from the calculating unit 916 to the fourth adjustment signal, generates a sixth adjustment signal by increasing the level of the generated fifth adjustment signal to a drivable level, and outputs the generated sixth adjustment signal through an output terminal OUT 3.

According to an embodiment of the present invention, the optical scanner 110 operates normally in response to the sixth adjustment signal input from the second adjustment unit 920. Consequently, the drive signal adjustment unit 430B including the first adjustment unit 918 and the second adjustment unit 920 generates the sixth adjustment signal that causes the optical scanner 110 to operate with normal seesaw movement, by adjusting the candidate drive signal, even when the optical scanner 110 is abnormal.

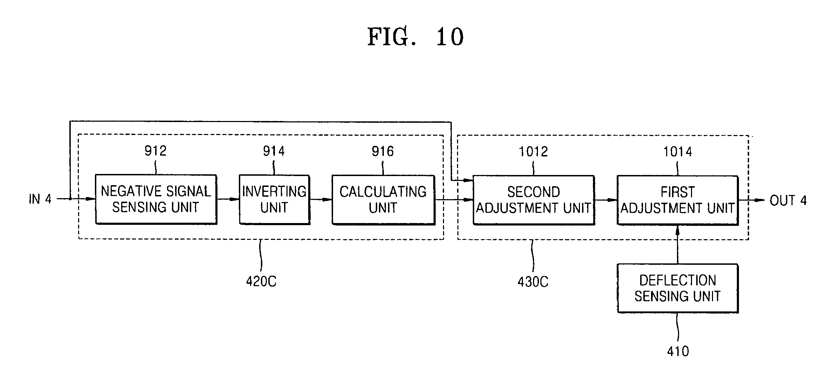

FIG. 10 is a detailed block diagram illustrating an image distortion prevention apparatus according to another embodiment of the present invention. The image distortion prevention apparatus includes a deflection sensing unit 410, a deflection prediction unit 420C and a drive signal adjustment unit 430C.

The deflection prediction unit 420C performs the same function as the deflection prediction unit 420, and includes a negative signal sensing unit 912, an inverting unit 914 and a calculating unit 916. In addition, the drive signal adjustment unit 430C performs the same function as the drive signal adjustment unit 430, and includes a first adjustment unit 1014 and a second adjustment unit 1012.

The image distortion prevention apparatus according to the present embodiment operates in the following manner.

The negative signal sensing unit 912 senses a candidate drive signal input through an input terminal IN 4 to determine whether the candidate drive signal has a negative value, and the inverting unit 914 generates an inverted drive signal by inverting the candidate drive signal when the candidate drive signal is determined to have a negative value. In other words, the inverting unit 914 does nothing to the candidate drive signal when the candidate drive signal has a positive value, and inverts the candidate drive signal when the candidate drive signal has a negative value.

The calculating unit 916 extracts the square root of the inverted drive signal and outputs the extracted square root result. Since the degree of deflection of the optical scanner 110 is proportional to the square of the magnitude of the mirror drive signal, the calculating unit 916 predicts that a change in the inclination of the optical scanner 110 when the inverted drive signal is input to the optical scanner 110 as the mirror drive signal is the square root of the inverted drive signal.

In this case, in order to extract the square root, the inverted drive signal should always have a positive value, and thus the deflection prediction unit 420C includes the negative signal sensing unit 912 and the inverting unit 914 as described above in the present embodiment.

The second adjustment unit 1012 generates a seventh adjustment signal by applying an offset corresponding to the extracted square root result obtained from the calculating unit 916 to the candidate drive signal, generates an eighth adjustment signal by increasing the level of the generated seventh adjustment signal to a drivable level, and outputs the generated eighth adjustment signal through an output terminal OUT 4.

The first adjustment unit 1014 generates a ninth adjustment signal by applying an offset corresponding to the sensing result of the deflection sensing unit 410 to the eighth adjustment signal, and outputs the generated ninth adjustment signal through the output terminal OUT 4.

According to an embodiment of the present invention, the optical scanner 110 operates normally in response to the ninth adjustment signal input from the second adjustment unit 1012. Consequently, the drive signal adjustment unit 430C including the first adjustment unit 1014 and the second adjustment unit 1012 generates the ninth adjustment signal that causes the optical scanner 110 to operate with normal seesaw movement, by adjusting the candidate drive signal, even when the optical scanner 110 is abnormal.

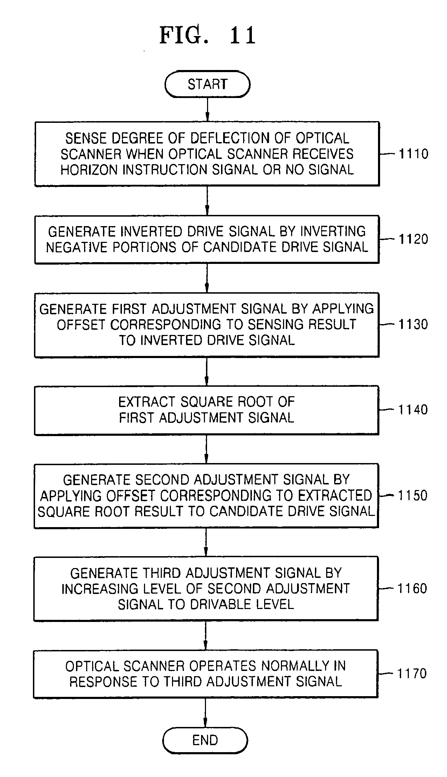

FIG. 11 is a flowchart illustrating an image distortion prevention method according to an embodiment of the present invention. The method includes operations 1110 through 1170 that cause the optical scanner 110 to operate with normal seesaw movement, even when the optical scanner 110 is abnormal.

The deflection sensing unit 410 senses the degree of deflection of the optical scanner 110 when the optical scanner 110 receives a horizon instruction signal or no signal (operation 1110), and the inverting unit 714 generates an inverted drive signal by inverting a candidate drive signal when the candidate drive signal has a negative value (operation 1120).

Here, operation 1110 may be executed simultaneously with, before or after operation 1120.

The first adjustment unit 716 generates a first adjustment signal by applying an offset corresponding to the sensing result obtained in operation 1110 to the inverted drive signal (operation 1130), and the calculating unit 718 extracts the square root of the first adjustment signal (operation 1140).

After operation 1140, the second adjustment unit 720 generates a second adjustment signal by applying an offset corresponding to the extracted square root result obtained in operation 1140 to the candidate drive signal (operation 1150), and generates a third adjustment signal by increasing the level of the generated second adjustment signal to a drivable level (operation 1160).

After operation 1160, the optical scanner 110 operates normally in response to the third adjustment signal generated in operation 1160 (operation 1170). If the level of the candidate drive signal lies in the range of drivable levels, operation 1160 is not required in the image distortion prevention method of the present embodiment, and thus operation 1170 is executed after operation 1150.

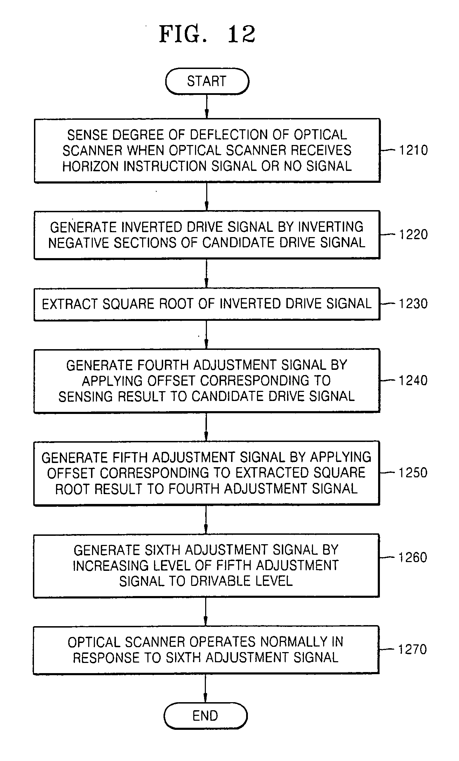

FIG. 12 is a flowchart illustrating an image distortion prevention method according to another embodiment of the present invention. The method includes operations 1210 through 1270 that cause the optical scanner 110 to operate with normal seesaw movement, even when the optical scanner 110 is abnormal.

The deflection sensing unit 410 senses the degree of deflection of the optical scanner 110 when the optical scanner 110 receives a horizon instruction signal or no signal (operation 1210), and the inverting unit 914 generates an inverted drive signal by inverting a candidate drive signal when the candidate drive signal has a negative value a horizon instruction signal or no signal(operation 1220), and the calculating unit 916 extracts the square root of the inverted drive signal (operation 1230).

Here, operation 1210 may be executed simultaneously with, before or after the execution of operation 1220 or operation 1230.

The first adjustment unit 918 generates a fourth adjustment signal by applying an offset corresponding to the sensing result obtained in operation 1210 to candidate drive signals (operation 1240).

After operation 1240, the second adjustment unit 920 generates a fifth adjustment signal by applying an offset corresponding to the extracted square root result obtained in operation 1230 to the fourth adjustment signal generated in operation 1240 (operation 1250), and generates a sixth adjustment signal by increasing the level of the fifth adjustment signal generated in operation 1250 to a drivable level (operation 1260).

After operation 1260, the optical scanner 110 operates normally in response to the sixth adjustment signal generated in operation 1260 (operation 1270). If the level of the candidate drive signal lies in the range of drivable levels, operation 1260 is not conducted in the image distortion prevention method of the present embodiment, and thus operation 1270 is executed after operation 1250.

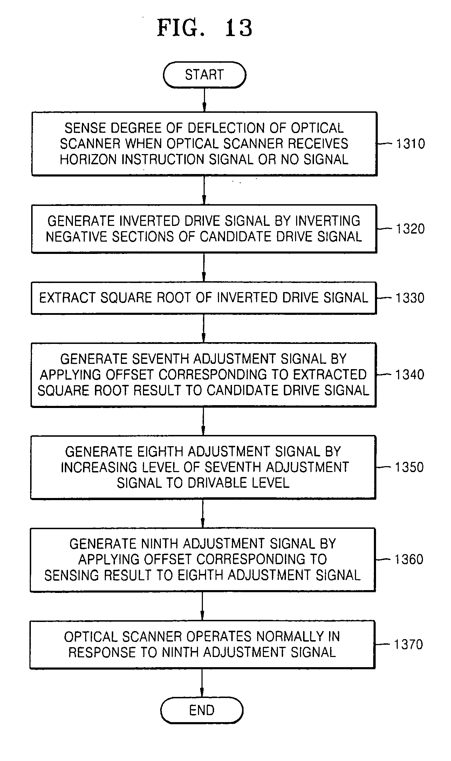

FIG. 13 is a flowchart illustrating an image distortion prevention method according to another embodiment of the present invention. The method includes operations 1310 through 1370 that cause the optical scanner 110 to operate with normal seesaw movement, even when the optical scanner 110 is abnormal.

The deflection sensing unit 410 senses the degree of deflection of the optical scanner 110 when the optical scanner 110 receives a horizon instruction signal or no signal (operation 1310), and the inverting unit 914 generates an inverted drive signal by inverting a candidate drive signal when the candidate drive signal has a negative value (operation 1320), and the calculating unit 916 extracts the square root of the inverted drive signal (operation 1330)a horizon instruction signal or no signal.

Here, operation 1310 may be executed simultaneously with, before or after the execution of operation 1320 or operation 1330.

The second adjustment unit 1012 generates a seventh adjustment signal by applying an offset corresponding to the extracted square root result obtained in operation 1330 to the candidate drive signal (operation 1340), and generates an eighth adjustment signal by increasing the level of the seventh adjustment signal generated in operation 1340 to a drivable level (operation 1350).

After operation 1350, the first adjustment unit 1014 generates a ninth adjustment signal by applying an offset corresponding to the sensing result obtained in operation 1310 to the eighth adjustment signal (operation 1360).

If the level of the candidate drive signal lies in the range of drivable levels, operation 1350 is not required in the image distortion prevention method of the present embodiment, and thus operation 1360 is executed after operation 1340. In this case, the first adjustment unit 1014 generates a ninth adjustment signal by applying an offset corresponding to the sensing result obtained in operation 1310 to the seventh adjustment signal generated in operation 1340.

After operation 1360, the optical scanner 110 operates normally in response to the ninth adjustment signal generated in operation 1360 (operation 1370).

The invention can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

As described above, the image distortion prevention apparatus and method of the present invention can cause an optical scanner to operate with normal seesaw movement, even when the optical scanner is abnormal when a signal instructing normal seesaw movement of the optical scanner is input to the optical scanner, assuming that the optical scanner is a normal optical scanner which is not deflected when there is no input signals.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An apparatus for preventing distortion of an image formed with light which is scanned by an optical scanner and has information regarding the image, the optical scanner being arranged to operate in response to a mirror drive signal that determines a degree of deflection of the optical scanner, the apparatus comprising:
a deflection sensing unit (410) arranged to sense the degree of deflection of the optical scanner when the optical scanner receives a horizon instruction signal or no signal; and
a drive signal adjustment unit (430) arranged to adjust a predetermined candidate drive signal according to the sensing result and to output the result of adjusting as the mirror drive signal,
wherein the candidate drive signal is arranged to instruct normal operation of the optical scanner, the horizon instruction signal is arranged to instruct no deflection of the optical scanner, and the scanner is arranged to operate normally in response to the result of adjusting.

2. The apparatus of claim 1, wherein the drive signal adjustment unit (430) is arranged to apply an offset corresponding to the sensing result to the candidate drive signal, to increase the level of the application result to a drivable level, and to output the result of increasing as the result of adjusting.

3. The apparatus of claim 1 or 2, further comprising a deflection prediction unit (420) arranged to predict a trend of a change in the degree of deflection of the optical scanner to be produced when a first adjustment signal is input as the mirror drive signal,
wherein the drive signal adjustment unit (430) is arranged to adjust the candidate drive signal according to the sensing result or the prediction result, and
wherein the first adjustment signal is the candidate drive signal that is adjusted according to the sensing result.

4. The apparatus of claim 3, wherein the deflection prediction unit (420) comprises:
an inverting unit (714) arranged to receive the candidate drive signal and to generate an inverted drive signal by inverting negative portions of the candidate drive signal; and
a calculating unit (718) arranged to extract the square root of the first adjustment signal and to output the extracted square root result as the prediction result, and
wherein the drive signal adjustment unit (430) comprises:
a first adjustment unit (716) arranged to generate the first adjustment signal by applying an offset corresponding to the sensing result to the inverted drive signal; and
a second adjustment unit (720) arranged to generate a second adjustment signal by applying an offset corresponding to the prediction result to the candidate drive signal, to increase the level of the generated second adjustment signal to a drivable level, and to output the result of increasing as the result of adjusting.

5. The apparatus of claim 1 or 2, further comprising a deflection prediction unit (420) arranged to predict a trend of a change in deflection of the optical scanner to be produced when the optical scanner receives the candidate drive signal as the mirror drive signal,
wherein the drive adjustment unit (430) is arranged to adjust the candidate drive signal according to the sensing result and the prediction result.

6. The apparatus of claim 5, wherein the deflection prediction unit (420) comprises:
an inverting unit (914) arranged to receive the candidate drive signal and to generate an inverted drive signal by inverting the candidate drive signal which has negative values; and
a calculating unit (916) arranged to extract the square root of the inverted drive signal and to output the extracted square root result as the prediction result, and
wherein the drive signal adjustment unit (430) comprises:
a first adjustment unit (918) arranged to generate a fourth adjustment signal by applying an offset corresponding to the sensing result to the candidate drive signal; and
a second adjustment unit (920) arranged to generate a fifth adjustment signal by applying an offset corresponding to the prediction result to the fourth adjustment signal to increasr the level of the fifth adjustment signal to a drivable level, and to output the result of increasing as the result of adjusting.

7. The apparatus of claim 5, wherein the deflection prediction unit (420) comprises:
an inverting unit (914) arranged to receive the candidate drive signal and to generate an inverted drive signal by inverting the candidate drive signal which has negative values; and
a calculating unit (916) arranged to extract the square root of the inverted drive signal and to output the extracted square root result as the prediction result, and
wherein the drive signal adjustment unit (430) comprises:
a first adjustment unit (1014) arranged to generate an eighth adjustment signal by applying an offset corresponding to the sensing result to a seventh adjustment signal, to increase the level of the generated eighth adjustment signal to a drivable level, and to output the result of increasing as the result of adjusting; and
a second adjustment unit (1012) arranged to generate the seventh adjustment signal by applying an offset corresponding to the prediction result to the candidate drive signal.

8. The apparatus of claim 3 or 5, wherein, when the optical scanner performs horizontal scanning, the candidate drive signal has a sinusoidal waveform, a saw-tooth waveform, or a square waveform, and when the optical scanner performs vertical scanning, the candidate drive signal has a saw-tooth waveform.

9. A method of preventing distortion of an image formed with light which is scanned by an optical scanner and has information regarding the image, the optical scanner operating in response to a mirror drive signal that determines a degree of deflection of the optical scanner, the method comprising:
(a) sensing the degree of deflection of the optical scanner when the optical scanner receives a horizon instruction signal or no signal; and
(b) adjusting a predetermined candidate drive signal according to the sensing result and outputting the result of adjusting as the mirror drive signal,
wherein the candidate drive signal instructs normal operation of the optical scanner, the horizon instruction signal instructs no deflection of the optical scanner, and the scanner operates normally in response to the result of adjusting.

10. The method of claim 9, wherein (b) comprises applying an offset corresponding to the sensing result to the candidate drive signal, increasing the level of the application result to a drivable level, and outputting the result of increasing as the result of adjusting.

11. The method of claim 9 or 10, further comprising the steps of:
inverting the candidate drive signal which has negative values;
generating a first adjustment signal by applying an offset corresponding to the sensing result to the inversion result;
extracting the square root of the first adjustment signal and generating a second adjustment signal by applying an offset corresponding to the extracted square root result to the candidate drive signal; and
increasing the level of second adjustment signal to a drivable level, and outputting the result of increasing as the mirror drive signal,
wherein the candidate drive signal instructs normal operation of the optical scanner, the horizon instruction signal instructs no deflection of the optical scanner, and the scanner operates normally in response to the result of adjusting.

12. The method of claim 9 or 10, further comprising the steps of:
inverting the candidate drive signal which has negative values, and extracting the square root of the inversion result;
generating a fourth adjustment signal by applying an offset corresponding to the sensing result to the candidate drive signal;
generating a fifth adjustment signal by applying an offset corresponding to the extracted square root result to the fourth adjustment signal; and
increasing the level of fifth adjustment signal to a drivable level and outputting the result of increasing as the mirror drive signal,
wherein the candidate drive signal instructs normal operation of the optical scanner, the horizon instruction signal instructs no deflection of the optical scanner, and the scanner operates normally in response to the result of adjusting.

13. The method of claim 9 or 10, further comprising the steps of:
inverting the candidate drive signal which has negative values, and extracting the square root of the inversion result;
generating a seventh adjustment signal by applying an offset corresponding to the extracted square root result to the candidate drive signal;
generating an eighth adjustment signal by applying an offset corresponding to the sensing result to the seventh adjustment signal; and
increasing the level of the eighth adjustment signal to a drivable level and outputting the result increasing as the mirror drive signal,
wherein the candidate drive signal instructs normal operation of the optical scanner, the horizon instruction signal instructs no deflection of the optical scanner, and the scanner operates normally in response to the result of adjusting.
